# EUROPEAN PATENT SPECIFICATION

(11) **EP 2 196 357 B1**
(45) Date of publication and mention of the grant of the patent: **09.02.2011**
(21) Application number: 09177851.4
(22) Date of filing: 03.12.2009
(51) Int. Cl.: B60Q 1/10, B60Q 1/12, B60Q 1/14

(54) **Vehicular illumination device**
Kraftfahrzeugbeleuchtungsvorrichtung
Dispositif d'éclairage automobile

(30) Priority: 09.12.2008 JP 2008313654
(43) Date of publication of application: 16.06.2010
(73) Proprietor: Koito Manufacturing Co., Ltd., Tokyo 108-8711 (JP)
(72) Inventor: Hori, Takashi c/o Koito Manufacturing Co., Ltd., Shizuoka-shi Shizuoka (JP)
(74) Representative: Finnie, Peter John

(56) References cited:
- FR-A1- 2 813 051
- US-A1- 2003 090 905
- US-A1- 2006 133 100
- US-A1- 2007 247 865

## Description

### Background to the Invention

The present invention relates to a vehicular illumination device, and more particularly, to a vehicle illumination device, which includes a lamp deflection angle control device for changing a radiating direction of lamp light according to a traveling state, such as an adaptive front-lighting system (hereinafter referred to as the "AFS"), in order to ensure traveling safety against system failures.

Conventionally, a system described in Japanese Patent Application Laid-Open (Kokai) No. JP-A-2006-182100 is known as an AFS for increasing traveling safety of vehicles. The AFS described in JP-A-2006-182100 includes swivel means capable of deflecting the radiating direction of headlamps, which are provided on the left and right sides in the front of a vehicle, in a horizontal-lateral direction, and leveling means capable of controlling the radiating direction of the headlamps in a perpendicular-vertical direction. This AFS is structured so that an electronic control unit (hereinafter referred to as the "ECU") controls the swivel means and the leveling means based on information such as a steering angle and a vehicle speed of a vehicle. According to this AFS, for example, when the vehicle travels on a curved road, it becomes possible to illuminate a road ahead of the curve in accordance with the traveling speed of the vehicle, which is effective to improve the traveling safety.

In the technique described in JP-A-2006-182100, when radiated light distribution of the headlamps has been switched to a main beam when an abnormal state occurs in light distribution switching means for switching the radiated light distribution of the headlamps between the main beam and the sub beam, control is performed to forcibly reduce the amount of light of the headlamps or turn off the headlamps in order to prevent dazzling to oncoming vehicles and pedestrians.

However, performing such control may reduce the visibility of the driver, and also may reduce the visibility of the vehicle, by turning down or turning off the headlamps.

The present invention has been developed in view of the above problems, and it is an object of the present invention to provide a vehicular illumination device, which is capable of reducing dazzling to oncoming vehicles and pedestrians while suppressing reduction in the visibility of a driver and reduction in the visibility of a vehicle, in case of AFS failures. The present invention presents an improvement over the vehicular illumination system described in EP 2 813 051, which discloses the features of the preamble of claim 1.

### Summary of the Invention

In order to solve the above problems, a vehicular illumination device according to an aspect of the present invention includes: swivel means for deflecting a radiating direction of a lamp included in a vehicle in a lateral direction; leveling means for deflecting the radiating direction of the lamp in a vertical direction; light distribution switching means for switching radiated light distribution of the lamp between a main beam and a sub beam; control means for controlling the swivel means, the leveling means, and the light distribution switching means according to a traveling state of the vehicle; and abnormal-state detecting means for detecting an abnormal state of the light distribution switching means in which the light distribution switching means fails to switch the radiated light distribution of the lamp from the main beam to the sub beam. When the abnormal state of the light distribution switching means is detected by the abnormal-state detecting means, the control means controls the swivel means to deflect the radiating direction of the lamp in the lateral direction, and controls the leveling means to deflect the radiating direction of the lamp in a downward direction.

Since radiated light from the lamp is less likely to be radiated directly to oncoming vehicles and pedestrians, dazzling to the oncoming vehicles and the pedestrians can be reduced. Moreover, since the lamp is neither turned down nor turned off, reduction in the visibility of a driver and reduction in the visibility of the vehicle can be minimized.

Another aspect of the present invention is also a vehicular illumination device. This vehicular illumination device includes: swivel means for deflecting a radiating direction of a lamp included in a vehicle in a lateral direction; leveling means for deflecting the radiating direction of the lamp in a vertical direction; light distribution switching means for switching radiated light distribution of the lamp between a main beam and a sub beam; control means for controlling the swivel means, the leveling means, and the light distribution switching means according to a traveling state of the vehicle; and abnormal-state detecting means for detecting an abnormal state of the light distribution switching means in which the light distribution switching means fails to switch the radiated light distribution of the lamp from the main beam to the sub beam. When the abnormal state of the light distribution switching means is detected by the abnormal-state detecting means, the control means controls the swivel means to deflect the radiating direction of the lamp in a direction opposite to an opposite-lane direction, and controls the leveling means to deflect the radiating direction of the lamp in a downward direction.

In the present invention, a vehicular illumination device is provided, which is capable of reducing dazzling to oncoming vehicles and pedestrians while suppressing reduction in the visibility of a driver and reduction in the visibility of a vehicle, in case of AFS failures.

### Brief Description of the Drawings

Examples of the present invention will now be described in detail with reference to the accompanying drawings, in which:
FIG. 1 is a diagram showing the state where a vehicular illumination device of an embodiment of the present invention is applied to a vehicle;
FIG. 2 is a diagram illustrating the structure of the vehicular illumination device;
FIG. 3 is a partial exploded perspective view showing an inner structure of a headlamp;
FIG. 4 is a flowchart illustrating failsafe control; and,
FIGS. 5(a) through 5(c) are diagrams illustrating a change in a light distribution pattern in the failsafe control.

### Detailed Description

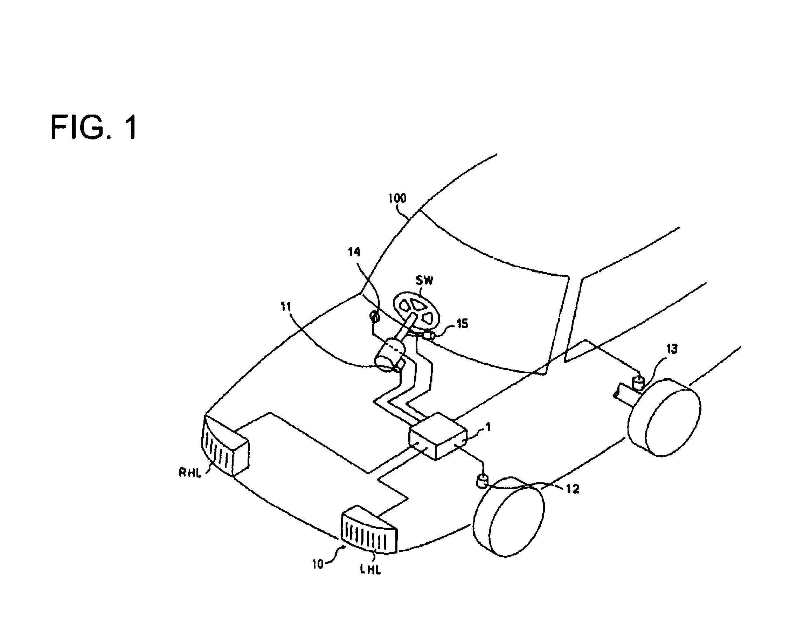

FIG. 1 is a diagram showing the state where a vehicular illumination device 10 of an embodiment of the present invention is applied to a vehicle 100. Left and right headlamps LHL, RHL of the vehicle 100 are structured so that the radiating direction thereof can be deflected in a horizontal-lateral direction and a perpendicular-vertical direction, as described below. The deflection control in the horizontal-lateral direction is swivel control, and the deflection control in the perpendicular-vertical direction is leveling control.

As control means in the present invention, the ECU 1 is capable of controlling deflecting operation of the left and right headlamps LHL, RHL, is capable of switching light distribution characteristics of each headlamp between a main beam and a sub beam, and also, is capable of adjusting brightness of each headlamp. The "main beam" as used herein includes: a so-called driving beam, which is also called a "high beam"; a motorway beam, which provides improved distance visibility for high-speed traveling; and a beam, which is a so-called "one-sided high beam," which provides a high beam on only one of the right and left sides in a plane vertical to an optical axis. The "sub beam" as used herein is a lower beam that does not cause dazzling to oncoming vehicles.

A steering sensor 11 for detecting a rotation angle of a steering wheel SW of the vehicle, that is, a steering angle of the vehicle, a vehicle speed sensor 12 for detecting a vehicle speed of the vehicle, and a vehicle height sensor 13 for detecting a tilt angle of a longitudinal axis of the vehicle with respect to a horizontal direction are connected to the ECU 1. A steering angle signal, a vehicle speed signal, and a tilt angle signal from the respective sensors are input to the ECU 1. Note that, since the structures of the steering sensor 11, the vehicle speed sensor 12, and the vehicle height sensor 13 are already known in the art, detailed description thereof will be omitted. A main switch 14 for turning on the headlamps, and a beam switching switch 15 for switching light distribution between the main beam and the sub beam are also connected to the ECU 1.

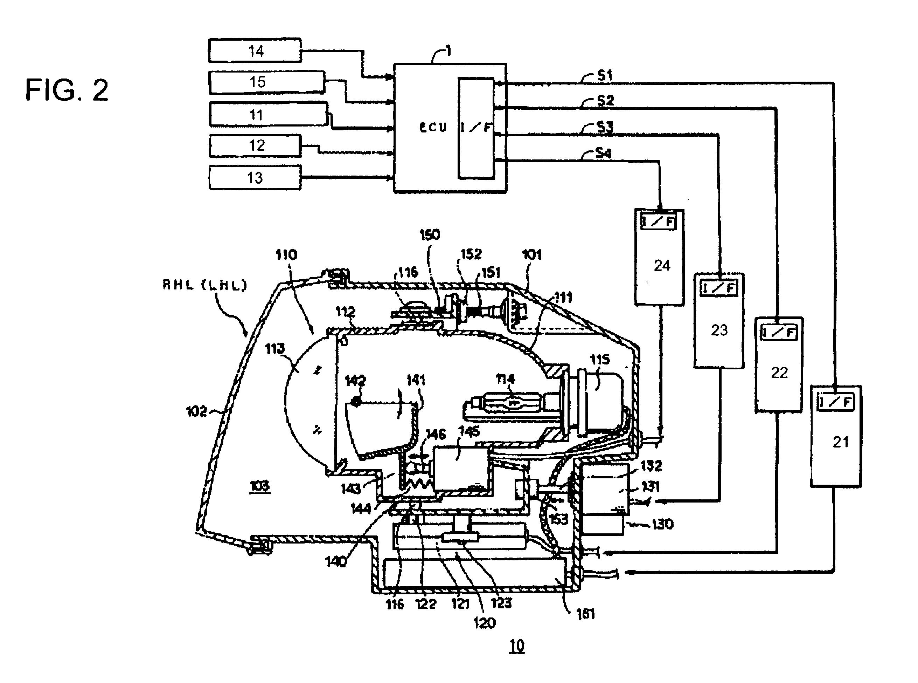

FIG. 2 is a diagram illustrating the structure of the vehicular illumination device 10. In FIG. 2, components corresponding to those in FIG. 1 are denoted by the same reference characters. Regarding the headlamps, FIG. 2 shows only one of the left and right headlamps. That is, FIG. 2 shows only the right headlamp RHL. The headlamp RHL includes a lamp body 101, and the lamp body 101 is shaped like a container having an open front face, and a translucent cover 102 is attached to the opening of the front face to form a lamp chamber 103 inside. A projector-type lamp unit 110 is disposed inside the lamp chamber 103. The lamp unit 110 is structured so that the radiating direction of the lamp unit 110 can be deflected in a horizontal-lateral direction and a perpendicular-vertical direction by a swivel mechanism 120 and a leveling mechanism 130, respectively. The lamp unit 110 is provided with a beam switching mechanism 140 for switching the beam between the main beam and the sub beam by driving a shade 141 provided inside of the lamp unit 110.

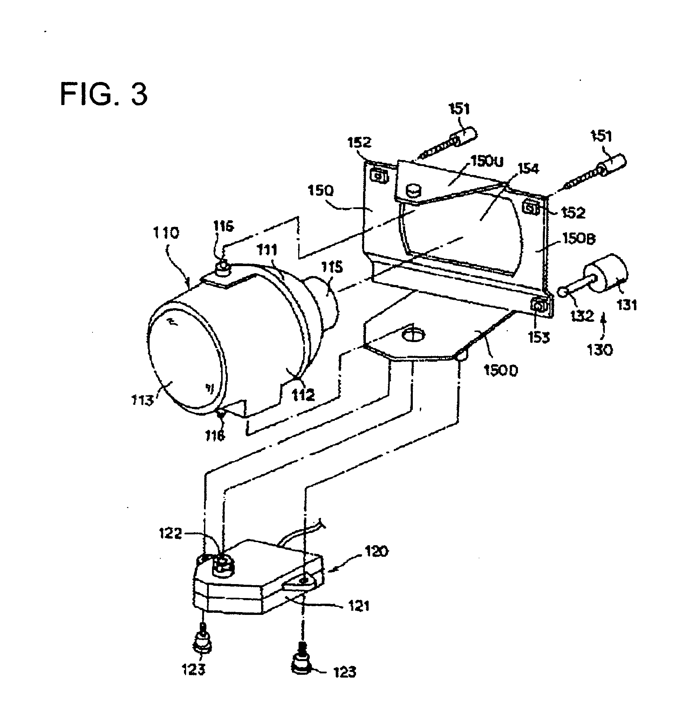

FIG. 3 is a partial exploded perspective view showing an inner structure of the headlamp. Referring to FIGS. 2 and 3, a housing of the lamp unit 110 is formed by a rotational ellipsoidal reflector 111, a holder 112 connected to a front edge of the reflector 111, and a lens 113 fixed to a front edge of the holder 112. A discharge bulb 114 as a light source is attached by a socket 115 that is attached to a bulb attachment hole provided on the rear face of the reflector 111.

The beam switching mechanism 140 for limiting light emitted from the discharge bulb 114 to switch the light between the main beam and the sub beam is disposed inside the holder 112 of the lamp unit 110. The beam switching mechanism 140 includes the shade 141, which is rotatable in the vertical direction about a spindle 142 so that the shade 141 can advance to, and withdraw from, a position on an optical axis in front of the discharge bulb 114, and a shade driving portion 143 for turning the shade 141 in the perpendicular-vertical direction.

The shade driving portion 143 is formed by: a spring 144 for urging the shade 141 to a sub beam position, which is a position where the shade 141 covers a part of a region in front of the discharge bulb 114; and a motor 145 having a plunger 146 for forcibly moving the shade 141, against the urging force of the spring 144, to a main beam position, which is a position to which the shade 141 is withdrawn from the position on the optical axis in front of the discharge bulb 114. A beam switching circuit 24 is connected to the motor 145, and the beam switching circuit 24 controls energization of the motor 145. In the beam switching mechanism 140, during de-energization of the motor 145, the shade 141 is turned to a position on the optical axis in front of the discharge bulb 114 by the urging force of the spring 144, whereby emitted light from the discharge bulb 114 is partially blocked, and light distribution characteristics of radiated light from the lamp unit 110 is switched to a sub beam state. On the other hand, when the beam switching circuit 24 energizes the motor 145, the shade 141 is turned downward against the urging force of the spring 144 so as to be withdrawn from the position on the optical axis in front of the discharge bulb 114, whereby the light distribution characteristics of radiated light from the lamp unit 110 is switched to a main beam state.

The lamp unit 110 is disposed inside a frame 150, which is formed in a substantially U shape by bending. The lamp unit 110 is supported so as to be able to turn in the horizontal direction about rotation spindles 116 provided in the upper and lower parts of the holder 112, in the state where the lamp unit 110 is vertically interposed between an upper plate 150U and a lower plate 150D of the frame 150, and in the state where the lamp unit 110 is inserted through an opening 154 provided in a back plate 150B of the frame 150.

Moreover, the lamp unit 110 is capable of turning in the horizontal-lateral direction by the swivel mechanism 120. The swivel mechanism 120 includes an actuator 121 as a turning drive source, and the actuator 121 is fixed to a lower surface of the lower plate 150D of the frame 150 by a fixing screw 123. A rotation output shaft 122 protrudes from an upper surface of the actuator 121, and the rotation output shaft 122 is connected to the lower rotation spindle 116 of the lamp unit 110. The actuator 121 includes, as built-in elements, a motor, not shown in the drawing, a speed change mechanism for shifting a rotation output of the motor, and the like, and the rotation output shaft 122 is rotated by rotation of the motor. Moreover, a swivel drive circuit 22 is connected to the actuator 121. As the swivel drive circuit 22 controls energization of the actuator 121, the lamp unit 110 is swung in a required angle range together with the rotation spindles 116 by the rotation output shaft 122, and the optical axis of the lamp unit 110, that is, the radiating direction thereof, is tilted laterally, whereby swivel control is performed.

The frame 150 is supported by the lamp body 101 by aiming screws 151 that screw in aiming nuts 152 provided at two positions on the upper side of the back plate 150B. Moreover, the frame 150 is connected to the leveling mechanism 130 in a ball bearing 153 provided in a part of the lower side of the back plate 150B.

The leveling mechanism 130 has a leveling motor 131 having a connection rod 132 capable of advancing and withdrawing along a longitudinal direction of the lamp unit 110. The leveling motor 131 is fixed to an outer surface of the lamp body 101, and a tip of the connection rod 132 is fitted in the ball bearing 153 of the frame 150. A leveling drive circuit 34 is connected to the leveling motor 131, and the leveling drive circuit 23 controls energization of the leveling motor 131. In the leveling mechanism 130, as the leveling drive circuit 23 drives the leveling motor 131, the connection rod 132 advances and withdraws in an axial direction, and the frame 150 connected to the connection rod 132 is swung in a perpendicular direction by using the two aiming screws 151 on the upper side as fulcrums, and the optical axis of the lamp unit 110 disposed inside the frame 150, that is, the radiating direction, is tilted vertically, whereby leveling control is performed. Note that by manually adjusting axial turning of the two aiming screws 151, the two positions of the upper side of the frame 150 are moved independently in the longitudinal direction, thereby adjusting the tilt in the horizontal-lateral direction and the tilt in the perpendicular direction of the frame 150. It should be understood that this adjustment by the aiming screws 151 is performed to adjust the optical axis of the lamp unit 110 so that the optical axis of the lamp unit 110 faces toward a predetermined vertical direction when the vehicle takes a predetermined posture.

The beam switching circuit 24, the swivel drive circuit 22, and the leveling drive circuit 23 are connected to the ECU 1 through signal transmission paths S4, S2, S3, respectively. The ECU 1 sends required control signals to the beam switching circuit 24, the swivel drive circuit 22, and the leveling drive circuit 23 via the signal transmission paths S4, S2, S3 so as to control the respective circuits, thereby controlling the beam switching mechanism 140, the swivel mechanism 120, and the leveling mechanism 130. The ECU 1 thus performs the beam switch control, the swivel control, and the leveling control described above.

Moreover, the discharge bulb 114 of the lamp unit 110 is connected to a ballast (booster) device 161 disposed on the inner bottom of the lamp body 101 by the socket 115. The ballast device 161 is connected to the ECU 1, and is connected also to a light adjusting circuit 21 connected to a power source (an on-board battery) not shown in the drawings. The ballast device 161 controls the light adjusting circuit 21 via the signal transmission path S1 by the ECU 1 to adjust the quantity of light that is radiated from the lamp unit 110. Note that, in order to transmit and receive signals between the ECU 1 and each circuit 21, 22, 23, 24 through the signal transmission paths S1, S2, S3, S4, an interface I/F is provided between the ECU 1 and each circuit 21, 22, 23, 24, which forms signal transmission means in the present invention.

Moreover, the ECU 1 has a function to detect an abnormal state of the beam switching circuit 24, the beam switching mechanism 140, and the signal transmission path S4. The ECU 1 transmits a predetermined signal at a required timing to the beam switching circuit 24 via the signal transmission path S4 that connects the ECU 1 and the beam switching circuit 24. By monitoring a response signal to this transmitted signal from the beam switching circuit 24, the ECU 1 can detect whether the beam switching mechanism 140 connected to the beam switching circuit 24 is operating normally or not, and whether the signal transmission path S4 between the ECU 1 and the beam switching circuit 24 is in a normal state or not. Then, when an abnormal state in the beam switching circuit 24, the beam switching mechanism 140, and the signal transmission path S4 is detected, the ECU 1 performs failsafe control, which will be described below, to prevent dazzling to oncoming vehicles.

Next, normal control in the vehicular illumination device 10 having the above structure will be described. When the main switch 14 is turned on, the ECU 1 controls the light adjusting circuit 21 to turn on the discharge bulb 114 of the lamp unit 110. When the beam switching switch 15 is switched to the main beam side, the ECU 1 controls the beam switching circuit 24 to drive the beam switching mechanism 140 so as to move the shade 141 to a position where the shade 141 is withdrawn from the position on the optical axis in front of the discharge bulb 114, thereby establishing a main beam state. When the beam switching switch 15 is switched to the sub beam side, the ECU 1 advances the shade 141 to the position on the optical axis in front of the discharge bulb 114 so as to block a part of light emitted from the discharge bulb 114, thereby establishing a sub beam state.

On the other hand, if the vehicle 100 is steered during traveling, a steering angle signal from the steering sensor 1 is input to the ECU 1. At the same time, a vehicle speed signal and a vehicle height signal of the vehicle 100 are input from the vehicle speed sensor 12 and the vehicle height sensor 13 to the ECU 1, respectively. The ECU 1 calculates an appropriate radiating direction of the headlamps RHL, LHL based on these signals, and controls the swivel drive circuit 22 and the leveling drive circuit 23 based on the calculated radiating direction. Thus, the swivel control is performed in which the swivel drive circuit 22 drives the swivel mechanism 120 to tilt the lamp unit 110 in the lateral direction so that the radiating direction of the lamp unit 110, that is, the radiating direction of the headlamps RHL, LHL, becomes the desired lateral direction corresponding to the steering direction of the vehicle 100. Moreover, the leveling control is performed in which the leveling drive circuit 23 drives the leveling mechanism 130 to tilt the frame 150 in the vertical direction so that the radiating direction of the lamp unit 110, that is, the radiating direction of the headlamps RHL, LHL, becomes the desired vertical direction corresponding to the traveling state of the vehicle 100. That is, AFS control is performed.

In such AFS control of the headlamps RHL, LHL, when an abnormal state occurs in the beam switching circuit 24, the beam switching mechanism 140, and the signal transmission path S4, switching between the main beam and the sub beam cannot be performed via the ECU 1. If the lamp unit 110 has been switched to the main beam state when an abnormal state occurs, dazzling to oncoming vehicles may be caused. Thus, in the vehicular illumination device 10 of the present invention, the ECU 1 performs failsafe control when the ECU 1 detects an abnormal state in the beam switching circuit 24, the beam switching mechanism 140, and the signal transmission path S4.

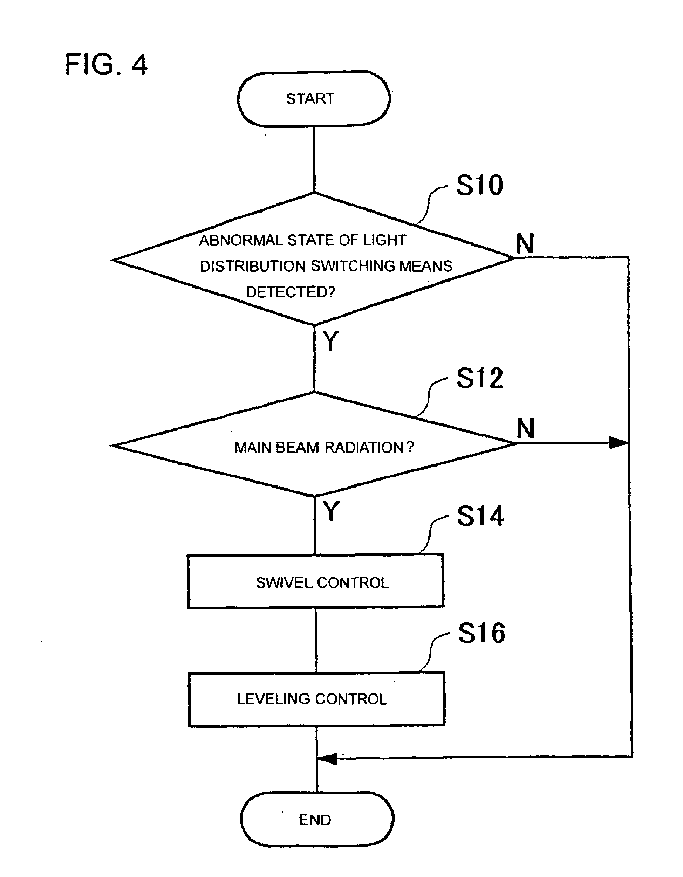

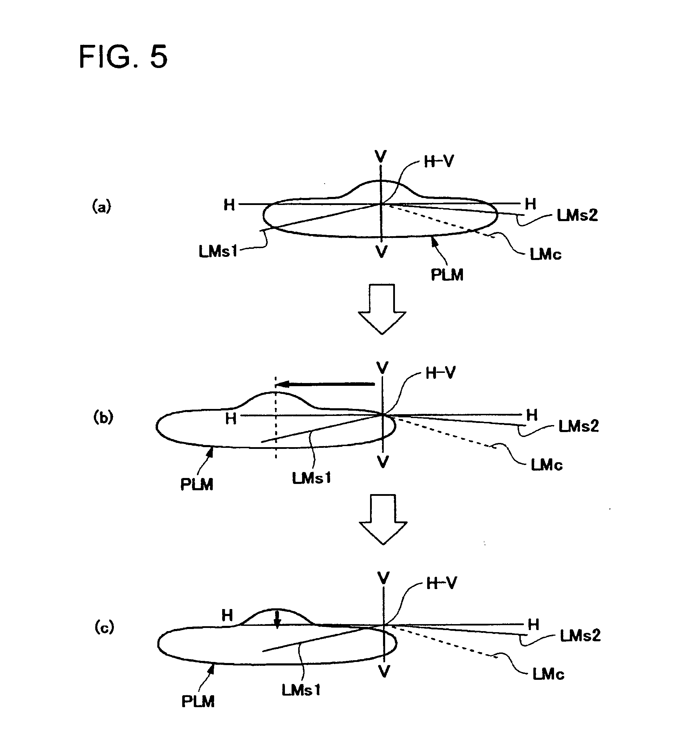

FIG. 4 is a flowchart illustrating the failsafe control. The flow shown in FIG. 4 is repeatedly executed at predetermined intervals. Moreover, FIGS. 5(a) through 5(c) are diagrams illustrating a change in a light distribution pattern in the failsafe control. The light distribution patterns shown in FIGS. 5(a) through 5(c) are light distribution patterns, which are formed on a virtual vertical screen positioned 25 m ahead of the vehicle, by light radiated from the vehicular illumination device 10 when the vehicle is traveling on a straight paved road having a single lane on one side (a two-lane road). As shown in FIGS. 5(a) through 5(c), a center line LMc located in the middle, and a left side line LMs1 and a right side line LMs2 located on both sides of the center line LMc, are formed on a road surface ahead of the vehicle, as lane marks that define the vehicle traveling lanes. The left side line LMs1 extends in a lower left direction from a point H-V (an intersection of lines H-H and V-V), which is a vanishing point of a perspective projection, and the center line LMc and the right side line LMs2 extend in a lower right direction from the point H-V.

The ECU 1 detects whether light distribution switching means, which includes the beam switching circuit 24, the beam switching mechanism 140, and the signal transmission path S4, is in an abnormal state or not (S10). If the light distribution switch means is not in an abnormal state (N in S10), the control flow is terminated.

If an abnormal state is detected in the light distribution means (Y in S10), the ECU 1 determines whether the lamp unit 110 has been switched to the main beam state or the sub beam state (S12). If it is determined that the lamp unit 110 has been switched to the sub beam (N in S12), the control flow is terminated. This is because there is no risk of dazzling to oncoming vehicles in the sub beam state.

On the other hand, if it is determined that the lamp unit 110 has been switched to the main beam (Y in S12), the ECU 1 forcibly operates swivel means, which includes the swivel drive circuit 22 and the swivel mechanism 120, and leveling means, which includes the leveling drive circuit 23 and the leveling mechanism 130, to reduce dazzling to oncoming vehicles and pedestrians. FIG. 5(a) shows a main beam distribution pattern PLM. In this case, as shown in FIG. 5(a), a part of the radiated light may radiate upwards or rightwards with respect to the horizontal direction, which can cause dazzling to the oncoming vehicles and the pedestrians.

In order to reduce dazzling to the oncoming vehicles and the pedestrians, the ECU 1 controls the swivel drive circuit 22 to move the swivel mechanism 120, thereby deflecting the radiating direction of the lamp unit 110 in a direction opposite to the direction of the opposite lane, and fixing the radiating direction to that direction (swivel control: S14). FIG. 5(b) shows a light distribution pattern after the swivel control. As shown in FIG. 5(b), in the case of, e.g., left-hand traffic, the radiating direction is deflected leftwards with respect to the straight traveling direction.

Then, the ECU 1 controls the leveling drive circuit 23 to move the leveling mechanism 130, thereby deflecting the radiating direction of the lamp unit 110 downwards with respect to the horizontal direction, and fixing the radiating direction to that direction (leveling control: S16). FIG. 5(c) shows a light distribution pattern after the leveling control. As shown in FIG. 5(c), by performing the swivel control and the leveling control, a region located on the right side of the point H-V in the horizontal direction is removed from the main beam distribution pattern PLM, whereby dazzling to the oncoming vehicles and the pedestrians can be reduced. Moreover, in the present embodiment, since the lamp unit 110 is neither turned down nor turned off, reduction in visibility of the driver and reduction in visibility of the vehicle can be minimized.

The deflection amount of the radiating direction of the lamp unit 110 in the above swivel control and the above leveling control is determined as appropriate according to the main beam distribution pattern. That is, the deflection amount of the radiating direction of the lamp unit 110 is determined so that the region located on the opposite-lane side with respect to the point H-V is away from the main beam distribution pattern. This can reduce dazzling to the oncoming vehicles and the pedestrians in a preferable manner.

The present invention is described above based on the embodiment. It is to be understood by those skilled in the art that these embodiments are shown by way of example only, and various modifications can be made to combinations of the components and the processing processes, and such modifications fall within the scope of the present invention.

For example, it is assumed in the above embodiment that the left and right headlamps RHL, LHL are controlled simultaneously. However, when an abnormal state is detected in the light distribution switching means in either of the left and right headlamps by detection of an abnormal state by the ECU 1, normal AFS control may be performed on the headlamp in a normal state, and the dazzling reducing control described above may be performed only on the headlamp in an abnormal state.

Moreover, the above embodiment is structured so that the leveling control is performed after the swivel control. However, the order of performing these controls is not specifically limited to this. The swivel control may be performed after the leveling control, or the swivel control and the leveling control may be performed simultaneously.

Moreover, in FIG. 2, the swivel drive circuit 22, the leveling drive circuit 23, and the beam switch circuit 24 are shown as structures independent of the swivel mechanism 120, the leveling mechanism 130, and the beam switch mechanism 140, respectively. However, these circuits may be assembled integrally in the lamp bodies 101 of the headlamps RHL, LHL by a circuit board or the like, or may be assembled integrally as a part of each mechanism. Moreover, it is also to be understood that the swivel mechanism 120 and the leveling mechanism 130 are not limited to the structure of the example embodiment, and the present invention may be applied to any mechanism capable of deflecting the radiating direction of the headlamp in the lateral direction and the vertical direction.

Moreover, the headlamp of the present invention is not limited to the structure including the projector-type lamp unit described in the embodiment, and may be similarly applied to a reflector-type lamp that reflects light emitted from a light source. In this case, the means for switching the beam between the main beam and the sub beam is not limited to the structure in which the beam is switched by driving the shade, and the present invention may also be applied to lamps that are structured to be turned on by switching a filament of a bulb as a light source.

Moreover, in the flowchart of FIG. 4, the ECU 1 deflects the radiating direction of the lamp unit 110 in the direction opposite to the opposite-lane direction as the swivel control of S14. However, the deflecting direction is not limited to the direction opposite to the opposite-lane direction, and the radiating direction may be deflected in either a left or right direction. This can also reduce dazzling to the oncoming vehicles and the pedestrians.

## Claims

1. A vehicular illumination device, comprising:
swivel means for deflecting a radiating direction of a lamp included in a vehicle in a lateral direction;
leveling means for deflecting the radiating direction of the lamp in a vertical direction;
light distribution switching means for switching radiated light distribution of the lamp between a main beam and a sub beam;
control means for controlling the swivel means, the leveling means, and the light distribution switching means according to a traveling state of the vehicle; and
abnormal-state detecting means for detecting an abnormal state of the light distribution switching means in which the light distribution switching means fails to switch the radiated light distribution of the lamp from the main beam to the sub beam, wherein
when the abnormal state of the light distribution switching means is detected by the abnormal-state detecting means, the control means
controls the leveling means to deflect the radiating direction of the lamp in a downward direction,
**characterized in that** when the abnormal state of the light distribution switching means is detected by the abnormal-state detecting means, the control means additionally controls the swivel means to deflect the radiating direction of the lamp in the lateral direction.

2. A vehicular illumination device according to claim 1,
wherein when the abnormal state of the light distribution switching means is detected by the abnormal-state detecting means, the control means controls the swivel means to deflect the radiating direction of the lamp in a direction opposite to an opposite-lane direction, and controls the leveling means to deflect the radiating direction of the lamp in a downward direction.

## Patentansprüche

1. Fahrzeug-Beleuchtungsvorrichtung, die umfasst:
eine Schwenkeinrichtung zum Ablenken einer Strahlungsrichtung einer in einem Fahrzeug enthaltenen Leuchte in einer seitlichen Richtung;
eine Neigeeinrichtung zum Ablenken der Strahlungsrichtung der Leuchte in einer vertikalen Richtung;
eine Lichtverteilungs-Umschalteinrichtung zum Umschalten der Verteilung von ausgestrahltem Licht der Leuchte zwischen einem Fernlicht und einem Abblendlicht;
eine Steuereinrichtung zum Steuern der Schwenkeinrichtung, der Neigeeinrichtung und der Lichtverteilungs-Umschalteinrichtung entsprechend einem Fahrzustand des Fahrzeugs; und
eine Einrichtung zum Erfassen eines abnormalen Zustandes, mit der ein abnormaler Zustand der Lichtverteilungs-Umschalteinrichtung erfasst wird, in dem die Lichtverteilungs-Umschalteinrichtung die Verteilung des ausgestrahlten Lichtes der Leuchte nicht von dem Fernlicht auf das Abblendlicht umschaltet, wobei
wenn der abnormale Zustand der Lichtverteilungs-Umschalteinrichtung durch die Einrichtung zum Erfassen eines abnormalen Zustandes erfasst wird, die Steuereinrichtung die Neigeeinrichtung so steuert, dass sie die Strahlungsrichtung der Leuchte nach unten ablenkt,
**dadurch gekennzeichnet, dass**, wenn der abnormale Zustand der Lichtverteilungs-Umschalteinrichtung durch die Einrichtung zum Erfassen eines abnormalen Zustandes erfasst wird, die Steuereinrichtung zusätzlich die Schwenkeinrichtung so steuert, dass sie die Strahlungsrichtung der Leuchte in der seitlichen Richtung ablenkt.

2. Fahrzeug-Beleuchtungsvorrichtung nach Anspruch 1,
wobei, wenn der abnormale Zustand der Lichtverteilungs-Umschalteinrichtung durch die Einrichtung zum Erfassen eines abnormalen Zustandes erfasst wird, die Steuereinrichtung die Schwenkeinrichtung so steuert, dass sie die Strahlungsrichtung der Leuchte in einer Richtung entgegengesetzt zu einer Richtung der gegenüberliegenden Fahrspur ablenkt, und die Neigeeinrichtung so steuert, dass sie die Strahlungsrichtung der Leuchte nach unten ablenkt.

## Revendications

1. Dispositif d'éclairage de véhicule comprenant :
des moyens de pivot pour dévier une direction de rayonnement d'une lampe comprise dans un véhicule, dans une direction latérale ;
des moyens de niveau pour dévier la direction de rayonnement de la lampe dans une direction verticale ;
des moyens de commutation de répartition de lumière pour commuter la répartition de la lumière rayonnée de la lampe entre un faisceau principal et un sous-faisceau ;
des moyens de commande pour commander les moyens de pivot, les moyens de niveau et les moyens de commutation de répartition de lumière selon un état de déplacement du véhicule ; et
des moyens de détection d'état anormal pour détecter un état anormal des moyens de commutation de répartition de lumière dans lequel les moyens de commutation de répartition de lumière n'arrivent pas à commuter la répartition de lumière rayonnée de la lampe du faisceau principal au sous-faisceau, dans lequel :
lorsque l'état anormal des moyens de commutation de répartition de lumière est détecté par les moyens de détection d'état anormal, les moyens de commande commandent les moyens de niveau pour dévier la direction de rayonnement de la lampe dans une direction descendante, **caractérisé en ce que** lorsque l'état anormal des moyens de commutation de répartition de lumière est détecté par les moyens de détection d'état anormal, les moyens de commande commandent de plus les moyens de pivot pour dévier la direction de rayonnement de la lampe dans la direction latérale.

2. Dispositif d'éclairage de véhicule selon la revendication 1, dans lequel lorsque l'état anormal des moyens de commutation de répartition de lumière est détecté par les moyens de détection d'état anormal, les moyens de commande commandent les moyens de pivot pour dévier la direction de rayonnement de la lampe dans une direction opposée à la direction de voie opposée, et commandent les moyens de niveau pour dévier la direction de rayonnement de la lampe dans une direction descendante.
